# EUROPEAN PATENT APPLICATION

(11) **EP 4 201 886 A1**
(43) Date of publication of application: **28.06.2023**
(21) Application number: 22020612.2
(22) Date of filing: 14.12.2022
(51) Int. Cl.: C01G 9/02

(54) **AN ADDITIVE FOR NEGATIVE ACTIVE MASS OF LEAD ACID BATTERIES BASED ON NANOSTRUCTURED MATERIALS**

(30) Priority: 21.12.2021 IT 202100032033
(71) Applicant: FIAMM Energy Technology S.p.A., 36075 Montecchio Maggiore (VI) (IT)
(72) Inventor: Fabris, Daniel, 36075 Montecchio Maggiore (VI) (IT); Bortolamei, Nicola, 36075 Montecchio Maggiore (VI) (IT); Cazzanti, Silvia, 36075 Montecchio Maggiore (VI) (IT); Daniel, Giorgia, 36075 Montecchio Maggiore (VI) (IT); Busacca, Concetta, 36075 Montecchio Maggiore (VI) (IT); Leonardi, Salvatore Gianluca, 36075 Montecchio Maggiore (VI) (IT); Di Blasi, Alessandra, 36075 Montecchio Maggiore (VI) (IT); Sergi, Francesco, 36075 Montecchio Maggiore (VI) (IT); Antonucci, Vincenzo, 36075 Montecchio Maggiore (VI) (IT)
(74) Representative: Lecce, Giovanni

(57) **Abstract**

The present invention relates to an additive for negative active mass of lead acid batteries, said additive being based on carbon nano fibre (CNF) and zinc oxide (ZnO) nanoparticles, which can be obtained *in situ* simultaneously with carbon nanofibers, to the use of said additive in the industrial and *automotive* sectors, and to a procedure for its preparation.

## Description

The present invention relates to an additive for negative active mass of lead acid batteries, said additive being based on carbon nanofibre (CNF) and zinc oxide (ZnO) nanoparticles, which can be obtained *in situ* simultaneously with carbon nanofibers, to the use of said additive in the industrial and *automotive* sectors, and to a procedure for its preparation.

More in particular, the present invention relates to the use of an additive as defined above for the negative active mass of lead acid batteries of technology defined as free acid or VRLA (Valve Regulated Lead Acid Batteries) with AGM (Adsorbed Glass Matt) or Gel technology, for applications in the industrial and *automotive* sectors (in which very strict cyclic and power performances are required).

Furthermore, the present invention relates to a procedure for preparing the above-mentioned additive.

The above-mentioned second type of lead acid accumulators, which became popular in parallel with the development of hybrid-powered vehicles, guarantees greater cyclability and battery life and is therefore suitable for use in the *automotive* sector.

In hybrid technology, in fact, functions such as start&stop and braking energy recovery require high battery performance both in terms of repeated starts (cycling) and in terms of charge acceptance, being subjected to repeated and short "charge boosting" in a partial state of charge (PSoC). In this historical period, in which efforts are being made to reduce CO₂ emissions by 40% by 2030, hybrid technology is the future; suffice it to say that replacing 50% of the fossil-fuel vehicles in use today with electric vehicles would result in a 20% reduction in CO₂ emissions. Therefore, in this context, more high-performance batteries are required, allowing longer distances, withstanding a greater number of starting cycles, guaranteeing fast and effective recharging by recovering energy during braking and maintaining the vehicle's on-board services even at deep discharges, when the engine comes to a stop.

Industrial applications, e.g. the *storage*-related photovoltaic market, have also demanded storage systems with high discharge capacity, reaching even 10-30% state of charge (SoC). Despite these low SoC values, the battery has to maintain high performance at high discharge currents. Therefore, in both industrial and *automotive* applications, the ability to recharge efficiently is required. One of the major problems at high depth of discharge (DOD) is sulphation of the negative plate, which makes the charging process and reaction reversibility difficult or impossible. This problem mainly occurs when the battery works in PSoC and is never fully recharged. It is known how this problem can be reduced by adding a carbon additive to the negative active mass. Depending on the type of additive, graphites or activated carbons (carbon black type, CB), the conductivity and charging process of the battery can be improved. In fact, materials such as CB, presenting a three-dimensional porous structure with large surface areas, improve the wettability of the active matter by the acid, increase the utilisation efficiency (NAM_{efficiency}), hinder the formation of large lead sulphate crystals (PbSO₄) following *Ostwald ripening* and also, depending on the pore size, can stimulate the formation of α-PbO₂ compared to PbSO₄. However, a limiting factor resulting from the use of both solutions is the increase in water consumption as the hydrogen evolution overvoltage is reduced, and consequently the maximum amount introduced must be 0.3%. To overcome this, the use of carbon materials functionalised with metal oxides (composites) has been introduced to inhibit/hinder this process.

The use of the electrostatic spinning technique to obtain these composite carbon materials (additives) that can be used in electrochemical storage devices has been proposed by Chinese applicants who described the method of preparing carbon nano fibres (CNFs) decorated with oxide nanoparticles of various metals. Said methods and additives are, however, different from those of the present invention in terms of preparation, morphology and application.

The present invention firstly proposes a solution that differs from the known art in that it involves the introduction of a specific ZnO-CNF additive into the anode mixture of the battery, synthesised by the electrospinning technique. The use of a different methodology, and above all an innovative *in situ* synthesis process for zinc oxide (ZnO), allows unique morphologies to be obtained that are not found in commercial materials commonly present on the market, and above all not used in lead acid batteries today. More in detail, an innovative aspect of the present invention concerns the preparation of a material consisting of the combination of two different structures (carbon fibres and ZnO particles), the formation of which takes place in a single synthesis process. An alternative would be the separate preparation of the ZnO particles subsequently incorporated into the polymer solution to be electrospun. This would involve the use of at least two different synthesis processes, one dedicated to the preparation of the ZnO particles and a second dedicated to the preparation of the ZnO-CNF additive. The above method would also result in non-uniform distribution of the ZnO particles on the carbon fibres. The present invention differs from the known art in that direct electrospinning of a solution of precursors based on zinc(II) acetate, polyacrylonitrile (PAN) and polyvinylpyrrolidone (PVP) in dimethylformamide (DMF), allows for the preparation, in a single synthesis process, of the ZnO-CNF additive, in which the ZnO particles are formed *in situ* on the carbon fibres.

More in particular, the purpose of the present invention is to use an additive based on zinc oxide (ZnO) nanoparticles uniformly distributed and well anchored on carbon nanofibres having a morphology such that high surface areas can be obtained. The BET analysis carried out to determine the surface area recorded a value of 133m²/g, and thus a greater presence of active reaction sites. The presence of CNF optimises the function performed by the carbon usually used, namely hindering the growth of PbSO₄ crystals, thus favouring the reversibility of the process.

A further purpose of the invention is to enable a uniform and effective utilisation of the active masses distributed over the entire surface of the plates by increasing the density of the active sites where charging and discharging processes take place.

Last but not least purpose of the invention is to inhibit the rapid polarisation and increase the evolution overvoltage of hydrogen, facilitating charge acceptance, which is particularly typical in the automotive industry and applications under HRPSoC (High Rate PSoC) conditions.

A further purpose is to enable an efficient recovery of battery capacity even after a deep discharge, whether for free acid technology battery or VRLA AGM or Gel.

These and other purposes are achieved by the additive for negative active mass of lead acid batteries of the present invention in accordance with the claims.

The chemical-physical and functional characteristics of the additive for negative active mass of lead acid batteries of the present invention can be better understood from the drawings and detailed description below.

### Brief description of the drawings

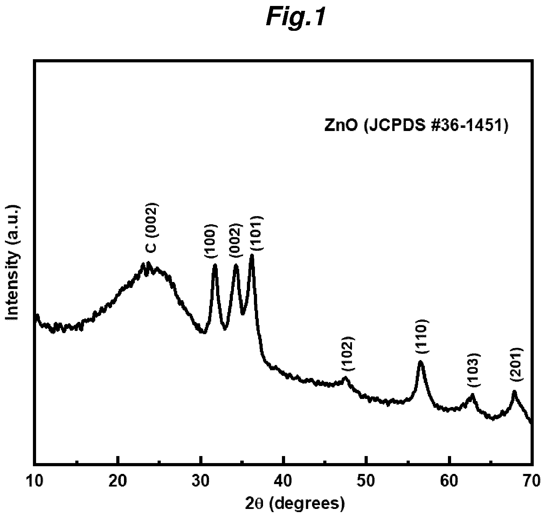

Figure 1, obtained by XRD (X-ray diffractometry), shows the presence of characteristic peaks of zinc oxide (ZnO) with a hexagonal crystal structure and a broad diffraction peak at 2θ=24° attributed to the peak (002) of amorphous carbon.

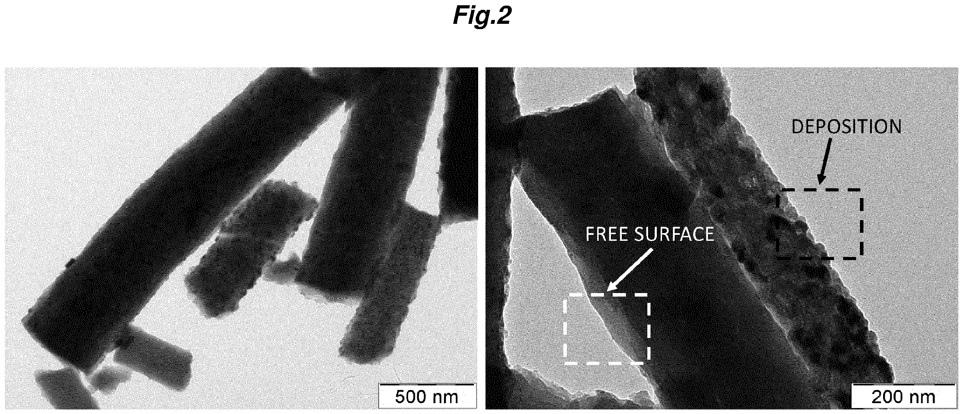

Figure 2, obtained by TEM (transmission electron microscope), shows the carbon fibres vary in diameter between 100 and 500nm.
   Zinc oxide (ZnO) is well distributed on the surface of the carbon fibres and the areas where deposition has not occurred are in the minority.
   The surface where oxide deposition does not occur is smooth.

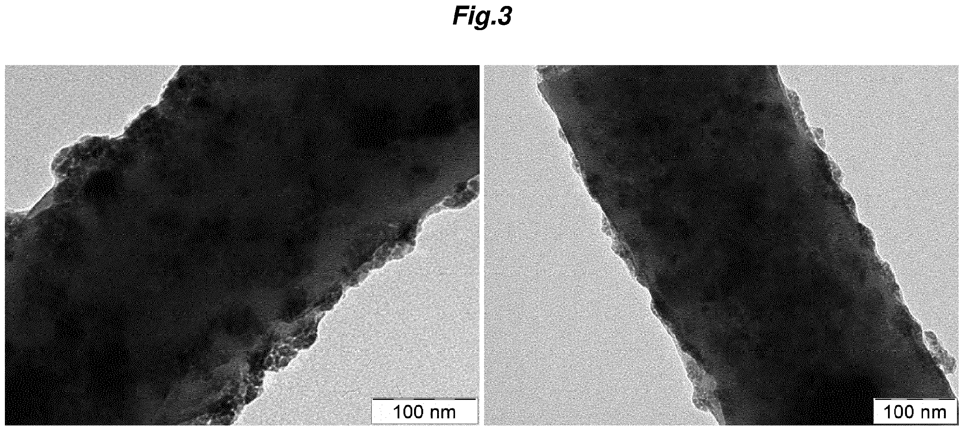

Figure 3, obtained from TEM, shows that the part of the carbon fibre (CNF) where the deposition takes place is corrugated. The ZnO particles are small (range: 10-50nm) and tend to form agglomeration domains.
   The morphology of the particles is irregular and inhomogeneous.

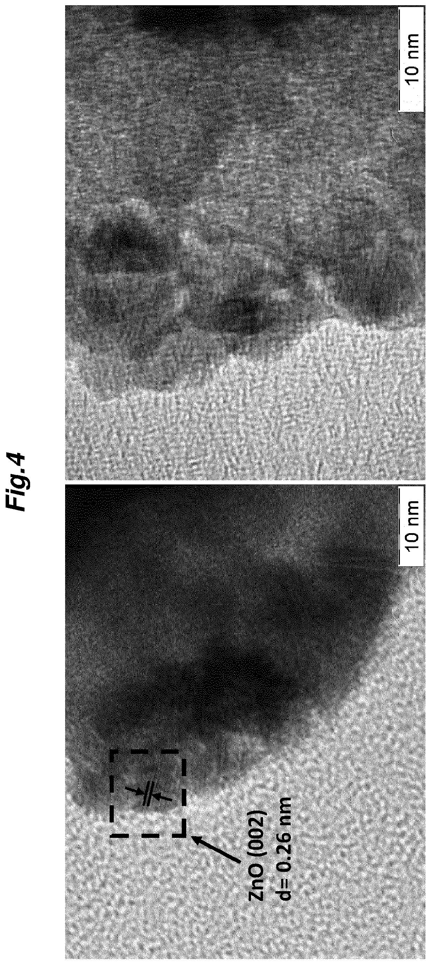

Figure 4, obtained from TEM, shows the characteristic planes of zinc oxide.
   The ZnO clusters do not appear enveloped by carbon shapes.

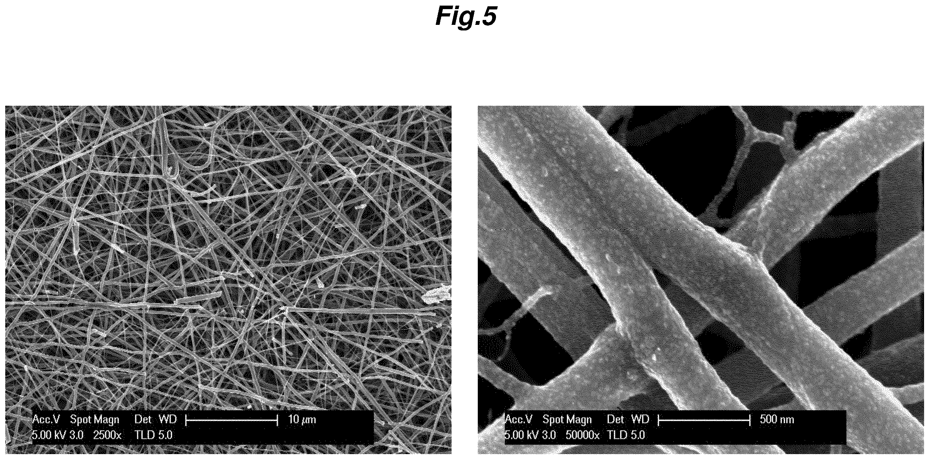

Figure 5, obtained by SEM (scanning electron microscope), shows that the sample has a regular morphology consisting of carbon fibres on which ZnO particles are uniformly distributed.
Figure 6, the graph shows that a lead acid battery, incorporating the ZnO-CNF additive in the anode paste, generates better cold cranking performance (-18°C) than a standard lead acid battery without the additive.
Figure 7, the graph shows that a lead acid battery, which incorporates the ZnO-CNF additive in the anodic paste, provides greater charge acceptance than a standard lead acid battery without the additive at a temperature of 0°C.

Thus, a first object of the invention is an additive for negative active mass of lead acid batteries, said additive being based on carbon nanofibre (CNF) and zinc oxide (ZnO) nanoparticles, which can be obtained *in situ* simultaneously with carbon nanofibers.

A further object of the invention is said additive wherein the ZnO particles are uniformly distributed and well anchored along the entire surface of the carbon nanofibres, preferably as visible by scanning and transmission electron microscopy (SEM-TEM).

A further object of the invention is an additive as defined above having a surface area with a value equal to 133m²/g, preferably as determined by BET analysis.

It is further an object of the present invention to use an additive as defined above for the negative active mass of lead acid batteries of technology defined as free acid or VRLA (Valve Regulated Lead Acid Batteries) with AGM (Adsorbed Glass Matt) or Gel technology, for applications in the industrial and *automotive* sectors, capable of improving, by way of example but not limited to, charge acceptance at 0°C and current supplied at -18°C.

A further object of the present invention is the procedure for preparing the above additive comprising the following steps:
- 0.5-2g of zinc(II) acetate dihydrate metal precursor (Zn(CH₃COO)₂·2H₂O) is solubilised in 5-15g of dimethylformamide (DMF) at room temperature 25°C, under magnetic stirring for 1-2h;
- a mixture containing 0.5-2g polyacrylonitrile (PAN) (Mw=150,000) and 0.5-2g polyvinylpyrrolidone (PVP) (Mw=1,300,000) in 5-20g DMF is subjected to magnetic stirring for 1-2h at 40-80°C;
- the two solutions thus obtained are suitably mixed at room temperature for further 1-2h in order to obtain a clear solution, optimal for the electrospinning process;
- the clear solution is introduced into a glass syringe provided with a steel needle and housed in the pump inside the electrospinning system. Following the application of an electric field at 15-20kV, the solution is electrospun and deposited on a special metal target placed at a distance of 10-15cm from the tip of the needle. The flow with which the solution is pushed outside the syringe, equal to 0.5-1.5ml min⁻¹, and the conditions inside the electrospinning chamber in terms of RH (relative humidity) <50% and a T=25°C are essential for an optimal electrodeposition. The formation of a "membrane" consisting of the mixture of starting materials occurs;
- in order to obtain ZnO-CNF, the membrane thus obtained is subjected to two consecutive thermal steps:
   an air treatment in a range between 230°C<T<300°C for a time between ½h<t<1h; and
   a second step in an inert environment in a range between 300°C<T<900°C for a time (t) between 1h<t<2h.

Zinc oxide is produced *in situ* starting from the zinc(II) acetate dihydrate metal precursor (Zn(CH₃COO)₂·2H₂O) in the first step of the thermal process.

All reagents of the synthesis procedure of the present invention are commercially available.

A preferred aspect of the invention is a procedure for preparing the above additive comprising the following steps:
- 1g of zinc(II) acetate dihydrate metal precursor (Zn(CH₃COO)₂·2H₂O) is solubilised in 8g of dimethylformamide (DMF) at room temperature 25°C, under magnetic stirring for 2h;
- a mixture containing 1g of polyacrylonitrile (PAN) (Mw=150,000) and 1g of polyvinylpyrrolidone (PVP) (Mw=1,300,000) in 12g of DMF is subjected to magnetic stirring for 2h at 60°C;
- the two solutions thus obtained are suitably mixed at room temperature for further 2h in order to obtain a clear solution, optimal for the electrospinning process;
- the clear solution is introduced into a glass syringe provided with a steel needle and housed in the pump inside the electrospinning system. Following the application of a 17kV electric field, the solution is electrospun and deposited on a special metal target placed at a distance of 12cm from the needle tip. The flow with which the solution is pushed outside the syringe, equal to 0.77ml min⁻¹, and the conditions inside the electrospinning chamber in terms of RH (relative humidity) <50% and a T=25°C are essential for an optimal electrodeposition. The formation of a "membrane" consisting of the mixture of starting materials occurs;
- in order to obtain ZnO-CNF, the membrane thus obtained is subjected to two consecutive thermal steps:
   1) in air at T=240°C for a time equal to 3h;
   2) in nitrogen at T=600°C for 2h.

It should be noted that a lead acid battery, consisting of a single cell with a nominal voltage of 2V, was assembled by incorporating the additive ZnO-CNF into the anode material and compared with an identical cell not containing the additive (Reference). An appropriate quantity of ZnO-CNF nano fibres was added to a standard lead oxide PbO (other commercial additives based on organic compounds and fibres may also be present in the composition of the anode mass), then the mixture was prepared by mechanical mixing with sulphuric acid.

After the complete homogenisation, the anode plate was made by depositing the mixture on a current collector consisting of a lead alloy metal grid and subjected to curing. The battery was finally assembled using a standard PbO lead oxide positive plate as a cathode.

Tests of charge acceptance and cold cranking were performed according to EN 50342-1 standard, appropriately scaled down to the electrical parameters for a single 2V cell.

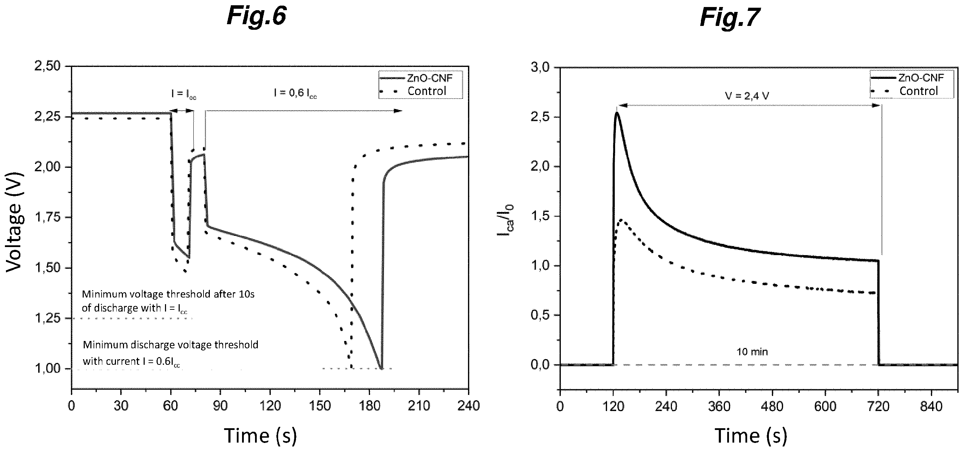

The battery containing the ZnO-CNF additive in the anode material is capable to maintain a higher voltage during the cold cranking current (I_{cc}) application phase at -18°C for 10s, also showing a longer life, before the complete discharge to the minimum voltage cut-off of 1V, than the cell not containing the additive (Fig. 6).

The battery containing the ZnO-CNF additive in the anode material is capable to maintain a higher charging current (I_{ca}) after 10min of applying a constant potential of 2.4V, at a temperature of (0°C) than the cell not containing the additive (Fig. 7).

The following Table 1 summarises the main comparison parameters derived from charge acceptance and cold cranking performances for the battery containing the ZnO-CNF additive and the reference battery (Reference).

**Table 1**

| | Parameter | Reference | ZnO-CNF |
|---|---|---|---|
| Charge acceptance (0°C) | I_{ca}/I₀ (after 10min charge at constant voltage 2.4V) | 0.72 | 1.05 |
| Cranking performances (-18°C) | Vₘᵢₙ after 10s (Ice) | 1.47 | 1.55 |
| | t_{6V} (s) | 106 | 122 |

An illustrative example for the preparation of the additive of the present invention follows.

### Preparatory Example

The ZnO-CNF additive, which is the object of the invention, is synthesised from zinc-based precursors, namely zinc acetate (Zn(CH₃COO)₂ ·2H₂O), suitably mixed with polyacrylonitrile (PAN) and polyvinylpyrrolidone (PVP) and electrospun together. The membrane obtained by electrospinning this mixture is subjected to heat treatment in order to obtain the final oxide on CNF. The direct addition of pre-formed ZnO particles into the PAN and PVP based polymer blend results in their non-uniform distribution after the final heat treatment, with the formation of agglomerates of ZnO particles separated from the carbon fibres. Therefore, the procedure of the present invention is highly innovative and allows to obtain a material characterised by a structure having a unique morphology with a high surface area consisting of ZnO nanoparticles uniformly distributed along the carbon nano fibre. Specifically, entering into the substance of the preparation, a zinc(II) acetate dihydrate metal precursor (Zn(CH₃COO)₂·2H₂O) in quantity comprised between 0.5g and 2g is solubilised in between 5g and 15g of dimethylformamide (DMF) at room temperature under magnetic stirring. The resulting solution is added to a mixture prepared by solubilising a quantity comprised between 0.5g and 2g of polyacrylonitrile (PAN) (Mw=150,000) and the same quantity of polyvinylpyrrolidone (PVP) (Mw=1,300,000) in a quantity comprised between 5g and 20g of dimethylformamide (DMF) at a temperature of 40°C<T<80C° under magnetic stirring. The total mixture is further kept under magnetic stirring at room temperature for 1h<t<2h in order to obtain a clear solution suitable for the electrospinning process. Once the optimal solution is obtained, it is introduced into a glass syringe provided with a steel needle to be subjected to the electrospinning process. Following the application of an electric field between 15kV and 20kV, the solution consisting of the selected precursors is electrospun and deposited on a special metal target placed at a distance of between 10cm and 20cm from the needle tip; what occurs is the formation of a 'membrane' consisting of a mixture of the starting materials. The flow (0.5-1.5ml min⁻¹) with which the solution is pushed outside the syringe using an infusion pump and the conditions inside the electrospinning chamber in terms of 30<RH<50% and a 20°C<T<25° are essential for an optimal electrodeposition. The membrane thus obtained, once removed from the metal target, is subjected to two consecutive thermal steps; a first step consists in an air treatment in a range between 230°C<T<300°C for a time (t) between ½h <t<1h and a second step in an inert environment in a range between 300°C<T<900°C for a time (t) between 1h<t<2h. This last treatment is responsible for the final formation of the sample in the form of metal oxide and carbon nanofibre, ZnO-CNF. It is during the heat treatments that the nanofibre (CNF) is formed starting from the PAN and PVP polymers and, simultaneously, the desired oxide (ZnO) is formed at reference temperatures. The final sample presents a morphology characterised by the presence of ZnO nanoparticles, uniformly distributed and well anchored along the entire length of the CNFs. The diameter of the nanofibres (CNF) is between 100nm and 500nm and the size of the ZnO nanoparticles deposited along them is between 10nm and 50nm. The resulting sample has a hexagonal crystal structure and a morphology in which the ZnO particles are distributed and well anchored along the entire surface of the carbon nanofibres.

The presence of the two precursor polymers, PAN and PVP, is responsible for the formation of a core-shell structure as early as the electrospinning stage, namely a structure whose core is derived from the carbonisation of PAN, while the outer shell is due to the carbonisation of PVP. The morphological characteristics of the sample obtained from PAN and PVP can be attributed to the higher affinity of PVP with zinc oxide (ZnO) compared to PAN, and thus to the migration of ZnO particles towards the shell layers during the heat treatment of PVP carbonisation. This morphology allows high surface areas to be obtained and thus a greater presence of active reaction sites. These additive characteristics give the negative electrode better electrocatalytic activity and lower capacitance losses of less than 4% after C20 post-test. The electrochemical response recorded following the charge acceptance and cranking performance tests shows a percentage increase in performance of between 40-50% and 10-20% compared to a standard FET (FIAMM Energy Technology S.p.A.) electrode. This shows that the cell consisting of the electrode additivated with ZnO-CNF is capable of accepting current in charge at low temperature (0°C) and is also capable of delivering current at low temperature (-18°C). This behaviour is indicative of improved electrocatalytic activity, which can be correlated to the presence of the additivated material constituting the new electrode configuration.

## Claims

1. An additive for negative active mass of lead acid batteries, said additive being based on carbon nanofibre (CNF) and zinc oxide (ZnO) nanoparticles, which can be obtained *in situ* simultaneously with carbon nano fibres.

2. The additive according to claim 1, wherein the ZnO particles are uniformly distributed and well anchored along the entire surface of the carbon nanofibres, preferably as visible by scanning and transmission electron microscopy (SEM-TEM).

3. The additive according to the preceding claims having a surface area with a value equal to 133m²/g, preferably as determined by BET analysis.

4. Use of the additive according to claims 1-3, for the negative active mass of lead acid batteries of technology defined as free acid or VRLA (Valve Regulated Lead Acid Batteries) with AGM (Adsorbed Glass Matt) or Gel technology, for applications in the industrial and *automotive* sectors, capable of improving, by way of example but not limited to, charge acceptance at 0°C and current supplied at -18°C.

5. Procedure for preparing the additive according to claims 1-3, comprising the following steps:
• 0.5-2g of zinc(II) acetate dihydrate metal precursor (Zn(CH₃COO)₂·2H₂O) is solubilised in 5-15g of dimethylformamide (DMF) at room temperature 25°C, under magnetic stirring for 1-2h;
• a mixture containing 0.5-2g polyacrylonitrile (PAN) (Mw=150,000) and 0.5-2g polyvinylpyrrolidone (PVP) (Mw=1,300,000) in 5-20g DMF is subjected to magnetic stirring for 1-2h at 40-80°C;
• the two solutions thus obtained are suitably mixed at room temperature for further 1-2h in order to obtain a clear solution, optimal for the electrospinning process;
• the clear solution is introduced into a glass syringe provided with a steel needle and housed in the pump inside the electrospinning system. Following the application of an electric field at 15-20kV, the solution is electrospun and deposited on a special metal target placed at a distance of 10-15cm from the tip of the needle. The flow with which the solution is pushed outside the syringe, equal to 0.5-1.5ml min⁻¹, and the conditions inside the electrospinning chamber in terms of RH (relative humidity) <50% and a T=25°C are essential for an optimal electrodeposition. The formation of a "membrane" consisting of the mixture of starting materials occurs;
• in order to obtain ZnO-CNF, the membrane thus obtained is subjected to two consecutive thermal steps:
an air treatment in a range between 230°C<T<300°C for a time between ½h<t<1h; and
a second step in an inert environment in a range between 300°C<T<900°C for a time (t) between 1h<t< 2h.

6. The procedure according to claim 5, comprising the following steps:
• 1g of zinc(II) acetate dihydrate metal precursor (Zn(CH₃COO)₂·2H₂O) is solubilised in 8g of dimethylformamide (DMF) at room temperature 25°C, under magnetic stirring for 2h;
• a mixture containing 1g of polyacrylonitrile (PAN) (Mw=150,000) and 1g of polyvinylpyrrolidone (PVP) (Mw=1,300,000) in 12g of DMF is subjected to magnetic stirring for 2h at 60°C;
• the two solutions thus obtained are suitably mixed at room temperature for further 2h in order to obtain a clear solution, optimal for the electrospinning process;
• the clear solution is introduced into a glass syringe provided with a steel needle and housed in the pump inside the electrospinning system. Following the application of a 17kV electric field, the solution is electrospun and deposited on a metal target placed at a distance of 12cm from the needle tip. The flow with which the solution is pushed outside the syringe, equal to 0.77ml min⁻¹, and the conditions inside the electrospinning chamber in terms of RH<50% and a T=25°C are essential for an optimal electrodeposition. The formation of a "membrane" consisting of the mixture of starting materials occurs;
• in order to obtain ZnO-CNF, the membrane thus obtained is subjected to two consecutive thermal steps:
1) in air at T=240°C for a time equal to 3h;
2) in nitrogen at T=600°C for 2h.
